## Europäisches Patentamt
## European Patent Office
## Office européen des brevets

(19)

(11) Veröffentlichungsnummer: **0 183 218**
**A2**

(12) # EUROPÄISCHE PATENTANMELDUNG

(21) Anmeldenummer: **85114931.0**

(22) Anmeldetag: **25.11.85**

(51) Int. Cl.⁴: **A 01 C 3/00**

(30) Priorität: **28.11.84 DE 3443364**

(43) Veröffentlichungstag der Anmeldung:
**04.06.86 Patentblatt 86/23**

(84) Benannte Vertragsstaaten:
**AT BE CH FR GB IT LI LU NL SE**

(71) Anmelder: **CIBA-GEIGY AG**
**Klybeckstrasse 141**
**CH-4002 Basel(CH)**

(72) Erfinder: **Ufer, Günter, Dr.**
**Cronstettenstrasse 29**
**D-6000 Frankfurt a.M. 1(DE)**

(72) Erfinder: **Karle, Joachim, Dr.**
**Rathenaustrasse 9**
**D-6056 Heusenstamm(DE)**

(74) Vertreter: **Zumstein, Fritz, Dr. et al,**
**Bräuhausstrasse 4**
**D-8000 München 2(DE)**

(54) **Güllebehandlungsmittel zur Verhinderung von Schwimmdecken und Sinkschichten sowie dessen Verwendung.**

(57) Gegenstand der Erfindung ist ein Güllebehandlungsmittel auf der Grundlage der Kombination aus A) einem Enzymgemisch, das auch Amyloglucosidasen enthält und B) Tonmineralien und C) Hilfs- bzw. Füllstoffen sowie dessen Verwendung zur Verhinderung von Schwimmdecken.

EP 0 183 218 A2

CIBA-GEIGY AG
CH-4002 Basel


Güllebehandlungsmittel zur Verhinderung von Schwimmdecken
und Sinkschichten sowie dessen Verwendung

B e s c h r e i b u n g

Das Auftreten von Schwimmdecken und Sinkschichten in Gülle
ist ein allgemein bekanntes Problem, das der gewünschten
Homogenisierung bzw. Fließfähigkeit entgegensteht.

Im Stand der Technik wurden bereits verschiedene Versuche
zur Lösung dieses Problems unternommen. So ist es in der
Landwirtschaft üblich, die Gülle mittels mechanischer
Rührwerke zu homogenisieren, um einerseits ein völliges
Entleeren der Güllebehälter möglich zu machen und um
andererseits die Gülle gleichmäßig ausbringen zu können.
Außerdem kann durch eine regelmäßige Belüftung der Gülle
(z.B. im Oxidationsgraben) auch der Geruch der Gülle
reduziert werden. Jedoch sind solche Rührwerke mit einem
erheblichen Aufwand an Anschaffungs-, Unterhalts- und
Betriebskosten verbunden; ferner sind derartige Geräte
wegen der Korrosionsgefährdung durch die Gülle meist
nur von kurzer Lebensdauer und häufig nicht betriebsbereit.
Zur Vermeidung der mit mechanischen Vorrichtungen verbundenen
Nachteile hat man daher Güllebehandlungsmittel als Zusätze
entwickelt, mit denen angestrebt wurde, die Bildung von
Schwimmdecken und Sinkschichten zu vermeiden und die auch
die Geruchsbelästigung reduzieren sollen. Zu solchen bekannten Zusätzen gehören Mittel auf der Basis: von
vulkanischem Urgesteinsmehl;von Cyanamid (in 50%iger wässriger
Lösung); von Metallsalzen mit Additiven; von Tonmineralien und Bakterien; von Enzymgemischen und Bakterien mit/ohne oberflächenaktiven Mitteln (Detergentien); von Enzymen
und pflanzlichen Saponinen. Allen diesen bekannten Mitteln
werden zwar von den Herstellern bestimmte vorteilhafte
Wirkungen auf die Gülle, mitunter auch eine Verhinderung
von Schwimmdecken zugeschrieben. Durch neuere Untersuchungen (vgl."Blätter für Landtechnik",Juni 1983, Nr. 225,
Seite 1-12, herausgegeben von der Eidg. Forschungsanstalt
für Betriebswirtschaft und Landtechnik) wurde jedoch
nachgewiesen, daß derartige Mittel keine oder nur unbefriedigende Wirkungen auf den ihnen zugeschriebenen
Anwendungsgebieten besitzen. Außerdem belegen diese Untersuchungen, daß die mit einem Mittel auf der Basis Enzymgemisch/Bakterien/Detergents kurzzeitig erzielbare Schwimmdeckenverhinderung nicht auf die beiden erstgenannten
(natürlichen) Komponenten zurückzuführen ist, sondern
allein auf das Detergent als chemisches Mittel.

Aufgabe der vorliegenden Erfindung war es daher, ein neues
Güllebehandlungsmittel bereitzustellen, welches tatsächlich
das Auftreten von Schwimmdecken verhindert, wobei auch
Sinkschichten vermieden werden.

Diese Aufgabe wird nun nach der vorliegenden Erfindung
durch ein Güllebehandlungsmittel gemäß den Patentansprüchen
gelöst. Dieses erfindungsgemäße Güllebehandlungsmittel
wirkt allein auf der Basis der anspruchsgemäßen Komponenten;

es ist frei von oberflächenaktiven Mitteln (Detergentien).
Es kann auch frei von Bakterien sein und ist dennoch
wirksam.                    Wie Untersuchungen in der Praxis
zeigen, lassen sich mit diesem erfindungsgemäßen Güllebehandlungsmittel Schwimmdecken in Güllebehältern verhindern.                    Es lassen
sich also damit tatsächlich in der Praxis die Resultate
erreichen, die mit den bekannten Mitteln, wie die zitierten Untersuchungen zeigen, nicht erzielbar sind.

Nachstehend wird der Anmeldungsgegenstand im einzelnen
erläutert.

Das erfindungsgemäß einzusetzende Enzymgemisch A besteht aus
auf diesem Gebiet üblicherweise eingesetzten Proteasen
(insbesondere Proteinasen), Amylasen, Lipasen und Cellulasen
sowie ferner noch aus Amyloglucosidasen. Beispielsweise sind
innerhalb dieser fünf Gruppen folgende Enzyme zu nennen:
Proteasen (insbesondere Proteinasen) aus:
Aspergillus oryzae; Bacillus subtilis; Bacillus polymyxa;
Streptomyces caespitosus; oder Tritirachium album. Amylasen: $\alpha$-Amylasen
aus: Aspergillus oryzae; Bacillus subtilis, Schweinepankreas; oder Gerstenmalz; ß-Amylasen aus: Gerstenmalz oder Süßkartoffel. Lipasen aus:
Schweinepankreas; Rhizopus delamar; oder Candida cylindracea. Cellulasen
aus: Aspergillus niger oder Trichoderma viride. Amyloglucosidasen aus:
Aspergillus niger oder Aspergillus oryzae.

Sämtliche dieser Enzyme sind als solche bekannt und lassen
sich nach üblichen Methoden herstellen.

Innerhalb der Komponente A kann jedes einzelne der fünf vorhandenen Enzyme (des Enzymgemisches A) mengenmäßig variieren; im allgemeinen beträgt
die Menge an Protease (insbesondere Proteinase) 0,5 bis 5 Gew.-Teile, an Amylase 0,5 bis 5 Gew.-
Teile, an Lipase 0,5 bis 5 Gew.-Teile, an Cellulase 0,5 bis 5 Gew.-Teile
und an Amyloglucosidase 0,5 bis 5 Gew.-Teile in dem Güllebehandlungsmittel.

Die als erfindungsgemäße Komponente B vorhandenen Tonmineralien sind
ebenfalls von der Art, wie sie auf dem vorliegenden Gebiet üblicherweise
verwendet werden. Besonders zu nennen sind Kaolin, z.B. Kaolinit, Benton, z.B. Bentonit, Vermiculit (Magnesium-Aluminium-Silikat), Montmorillonit (Aluminium-Silikat), Talkum (Magnesium-Silikat), Zeolex [R]
(Natrium-Aluminium-Silikat) oder Hectorit (Natrium-Magnesium-Lithium-Silikat).

Als Hilfs- bzw. Füllstoffe im Zusammenhang mit der
erfindungsgemäßen Komponente C kommen die auf diesem
Gebiet üblichen anorganischen und/oder organischen
Additive in Frage. Beispiele für anorganische Zusätze sind
Mineralsalze, wie Calciumchlorid, Natriumchlorid oder Magnesiumchlorid.

Als Beispiele für organische Zusätze sind die Gruppe
der Zucker, insbesondere Dextrose, Fructose oder Saccharose zu nennen.

Das erfindungsgemäße Güllebehandlungsmittel ist frei von Detergentien.
Es kann auch frei von Bakterien sein.

Durch die anspruchsgemäße besondere Kombination der Komponenten A, B und C wird erstmals und in nicht zu erwartender Weise ein Güllebehandlungsmittel bereitgestellt,
mit dem sich die Verhinderung von Schwimmdecken und Sinkschichten erreichen läßt. In Anbetracht der Art dieser
drei Komponenten und unter Berücksichtigung des oben
geschilderten Stands der Technik ist dieses Resultat
für den Fachmann überraschend; denn das einzige bekannte
Produkt, das einen gewissen Einfluß auf die Schwimmdeckenbildung auszuüben scheint, wirkt über seine Detergentkomponente (die jedoch im erfindungsgemäßen Güllebehandlungsmittel nicht vorhanden ist).

Das Mengenverhältnis der drei Komponenten A, B und C im
erfindungsgemäßen Güllebehandlungsmittel kann innerhalb
weiter Bereiche variieren. Im allgemeinen besteht das
erfindungsgemäße Güllebehandlungsmittel aus 2 bis 10 Gew.-
Teile, insbesondere 5 bis 7 Gew.-Teile Enzymgemisch A,
20 bis 50 , insbesondere 30 bis 40 Gew.-Teile Tonmineral B,
und 40 bis 70 , insbesondere 50 bis 60 Gew.-Teile Hilfs- bzw.
Füllstoffen C. Besonders bevorzugt ist ein Güllebehandlungsmittel bestehend aus 6 Gew.-Teile A, 38 Gew.-Teile B
und 56 Gew.-Teile C.

Wegen seiner beim Einsatz erzielbaren besonderen Eigenschaften ist weiterer Gegenstand der Erfindung auch die
Verwendung des Güllebehandlungsmittels zur Verhinderung
von Schwimmdecken und Sinkschichten gemäß den Patentansprüchen. Die Anwendungsmenge kann dabei variieren; im
allgemeinen beträgt sie 50 bis 300 g Güllebehandlungsmittel pro 10 m$^3$ Gülle.
Dabei kann die Anwendung zweckmäßig jeweils ein- bis zweimal
in Zeitabständen von 7 bis 60 Tagen erfolgen.

Dabei kann die zu behandelnde Gülle den verschiedenen
Tierhaltungen entstammen, insbesondere zu nennen ist
die Schweine- und Rinderhaltung, aber auch Hühnerhaltung.

Durch die Anwendung des erfindungsgemäßen Güllebehandlungsmittels lassen sich, wie oben erläutert, auf einfache
und wirksame Weise Schwimmdecken und Sinkschichten verhindern, was aufgrund des Stands der Technik nicht zu
erwarten war.

Ein weiterer überraschender Vorteil des erfindungsgemäßen
Güllebehandlungsmittels besteht darin, daß bei seinem
Einsatz der Stickstoff-Verlust in der Gülle, wie er gewöhnlich aufgrund von Lagerung und Umpumpen etc. eintritt,
deutlich vermindert wird. Wie Feststellungen der Anmelderin
ergaben, ist bei der erfindungsgemäßen Güllebehandlung
davon auszugehen, daß bedeutende Stickstoffmengen
beibehalten bzw. gesichert werden können. Eine
derartige N-Sicherung stellt einen ganz beträchtlichen und
unerwarteten Vorteil hinsichtlich Düngungseffizienz der
behandelten Gülle dar.

0183218

Schließlich läßt sich mit dem erfindungsgemäßen Güllebehandlungsmittel auch ein deutlich vorteilhafter Effekt
hinsichtlich Geruchsminderung feststellen. So ergaben
Versuche in der Praxis, daß Güllen verschiedener
Provenienz nach der erfindungsgemäßen Behandlung frei
von jeder (durch Testpersonen) feststellbaren Geruchsbelästigung waren. Somit ist das erfindungsgemäße
Güllebehandlungsmittel dazu geeignet, ein weiteres
dringendes Bedürfnis, nämlich die Geruchsminderung
tatsächlich zu erzielen (im Unterschied zu den eingangs
geschilderten bekannten Produkten, die in dieser Hinsicht sämtlich unbefriedigende Resultate liefern, vgl.
die zitierten "Blätter für Landtechnik").

Demgemäß ist ein weiterer Gegenstand der Erfindung die
Verwendung des neuen Güllebehandlungsmittels zur Geruchsminderung.                               Dabei sind Art
und Menge der Komponenten A, B und C sowie die Anwendungsbedingungen analog denjenigen bei der Schwimmdeckenverhinderung und Vermeidung von Sinkschichten.

Das folgende Beispiel erläutert die vorliegende Erfindung,
ohne ihre Anwendung zu beschränken.

B e i s p i e l

Ein Güllebehandlungsmittel der folgenden Zusammensetzung:

| | |
|---|---|
| Enzymgemisch<br>(aus 2,5 Gew.-Teile Protease, insbesondere Proteinase,<br>1 Gew.-Teil Amylase, 0,5 Gew.-Teile<br>Lipase, 1 Gew.-Teil Cellulase) | 5 Gew.-Teile |
| Amyloglucosidase | 1 " |
| Kaolin | 38 " |
| Zucker | 38 " |
| Calciumchlorid | 18 " |

wurde durch Vermischen der genannten Komponenten hergestellt, wobei ein weißes, freifließendes Pulver entstand. 100 g dieses fertigen Mittels werden zur Behandlung von 10 m³ Gülle, die der Rinderhaltung entstammte, eingesetzt.


Zum Vergleich wurde Gülle der gleichen Provenienz und von gleicher Menge untersucht (ohne Zusatz).

Ergebnis: Während sich bei der Kontrollprobe (ohne Zusatz) eine Schwimmdecke ausbildete, war die erfindungsgemäß behandelte Gülleprobe nicht nur frei von jeglicher Schwimmdeckenbildung, sondern auch frei von Sinkschichten.

P a t e n t a n s p r ü c h e

1. Güllebehandlungsmittel auf der Grundlage eines Enzymgemisches von Proteasen (insbesondere Proteinasen), Amylasen, Lipasen und Cellulasen, d a d u r c h  g e k e n n z e i c h n e t , daß das Mittel besteht aus der Kombination

A) des genannten Enzymgemisches, das zusätzlich Amyloglucosidasen enthält, und

B) Tonmineralien und

C) Hilfs- bzw. Füllstoffen.

2. Güllebehandlungsmittel gemäß Anspruch 1, dadurch gekennzeichnet, daß das Tonmineral B) Kaolin ist und daß die Hilfs- bzw. Füllstoffe C) Calciumchlorid und/oder Zucker sind.

3. Güllebehandlungsmittel gemäß einem der vorhergehenden Ansprüche, dadurch gekennzeichnet, daß es aus 2 bis 10 Gew.-Teilen des Enzymgemisches A , 20 bis 50 Gew.-Teilen Tonmineralien B und 40 bis 70 Gew.-Teilen Hilfs- bzw. Füllstoffen C besteht.

0183218

4.    Verwendung des Güllebehandlungsmittels gemäß einem
der vorhergehenden Ansprüche zur Verhinderung von Schwimmdecken und Sinkschichten.